# EUROPÄISCHE PATENTANMELDUNG

(11) **EP 4 358 197 A1**
(43) Veröffentlichungstag der Anmeldung: **24.04.2024**
(21) Anmeldenummer: 23202960.3
(22) Anmeldetag: 11.10.2023
(51) Int. Cl.: H01M 4/86, H01M 4/88, H01M 8/1018, H01M 8/10

(54) **GASDIFFUSIONSLAGE FÜR BRENNSTOFFZELLEN MIT EIGENSCHAFTSGRADIENT UND GERINGER PLASTISCHER VERFORMBARKEIT UND VERFAHREN ZU IHRER HERSTELLUNG**

(30) Priorität: 18.10.2022 DE 102022127228
(71) Anmelder: Carl Freudenberg KG, 69469 Weinheim (DE)
(72) Erfinder: BOCK, Achim, 69469 Weinheim (DE); KLEIN, Kristof, 69469 Weinheim (DE); RAKOUSKY, Christoph, 64372 Ober-Ramstadt (DE); BARSCH, Hannes, 69123 Heidelberg (DE); LOEBLE, Matthias, 68309 Mannheim (DE); VON SPEE, Amélie, 68165 Mannheim (DE)

(57) **Zusammenfassung**

Die vorliegende Erfindung betrifft ein Verfahren zur Herstellung einer Gasdiffusionslage für eine Brennstoffzelle mit einem Eigenschaftsgradienten und mit einer geringen plastischen Verformbarkeit (einem geringen Setzverhalten) sowie die nach diesem Verfahren erhältlichen Gasdiffusionslagen und eine Brennstoffzelle, die eine solche Gasdiffusionslage enthält.

## Beschreibung

Die vorliegende Erfindung betrifft ein Verfahren zur Herstellung einer Gasdiffusionslage für eine Brennstoffzelle mit einem Eigenschaftsgradienten und mit einer geringen plastischen Verformbarkeit (einem geringen Setzverhalten). Die Erfindung betrifft weiterhin die nach diesem Verfahren erhältlichen Gasdiffusionslagen und eine Brennstoffzelle, die eine solche Gasdiffusionslage enthält.

### HINTERGRUND DER ERFINDUNG

Brennstoffzellen nutzen die chemische Umsetzung eines Brennstoffs, insbesondere von Wasserstoff, mit Sauerstoff zu Wasser, um elektrische Energie zu erzeugen. In Wasserstoff-Sauerstoff-Brennstoffzellen wird Wasserstoff oder ein wasserstoffhaltiges Gasgemisch der Anode zugeführt, wo eine elektrochemische Oxidation unter Abgabe von Elektronen stattfindet (H₂ → 2 H⁺ + 2 e⁻). Über eine Membran, welche die Reaktionsräume gasdicht voneinander trennt und elektrisch isoliert, erfolgt ein Transport der Protonen aus dem Anodenraum in den Kathodenraum. Die an der Anode bereitgestellten Elektronen werden über einen äußeren Leiterkreis der Kathode zugeleitet. Der Kathode wird Sauerstoff oder ein sauerstoffhaltiges Gasgemisch zugeführt, wobei eine Reduktion des Sauerstoffs unter Aufnahme der Elektronen stattfindet. Die dabei gebildeten Sauerstoffanionen reagieren mit den über die Membran transportierten Protonen unter Bildung von Wasser (1/2 O₂ + 2 H⁺ + 2 e⁻ → H₂O).

Für viele Anwendungen, speziell im automobilen Antriebsstrang, werden Niedertemperatur-Protonenaustauschmembran-Brennstoffzellen (PEMFC, proton exchange membrane fuel cells, auch als polymer electrolyte membrane fuel cells bezeichnet) eingesetzt, deren Kernstück eine Polymer-Elektrolyt-Membran (PEM) ist, die nur für Protonen (bzw. Oxoniumionen H₃O⁺) und Wasser durchlässig ist und das Oxidationsmittel, im Allgemeinen Luftsauerstoff, räumlich vom Reduktionsmittel trennt. Auf die gasdichte, elektrisch isolierende, protonenleitende Membran ist auf der Anoden- und Kathodenseite eine Katalysatorschicht aufgebracht, die die Elektroden ausbildet und die in der Regel Platin als katalytisch aktives Metall enthält. In den Katalysatorschichten laufen die eigentlichen Redoxreaktionen und Ladungstrennungen ab. Membran und Katalysatorschichten bilden eine Einheit, die auch als CCM (catalyst coated membrane) bezeichnet wird. Auf beiden Seiten der CCM befindet sich eine Gasdiffusionslage (GDL), die den Zellaufbau stabilisiert und Transport- und Verteilerfunktionen für Reaktionsgase, Wasser, Wärme und Strom übernimmt. Membran, Elektroden und Gasdiffusionslage bilden die Membran-Elektroden-Einheit (MEA, membrane electrode assembly). Zwischen den Membran-Elektroden-Einheiten sind Strömungsverteilerplatten (sogenannte Bipolarplatten) angeordnet, die Kanäle zur Versorgung der angrenzenden Kathode und Anode mit Prozessgasen sowie in der Regel zusätzlich innenliegende Kühlkanäle aufweisen.

Den Gasdiffusionslagen kommt eine wesentliche Bedeutung für die Funktion und Leistungsfähigkeit der Brennstoffzelle zu. Durch sie werden zum einen die in den Elektrodenreaktionen verbrauchten und entstehenden Prozesskomponenten transportiert und zum anderen die in den Halbzellenreaktionen gebildeten und verbrauchten Elektronen und die bei der Reaktion gebildete Wärme zu den Strömungsverteilerplatten geleitet. Zudem wirkt die GDL auch als mechanischer Ausgleich zwischen der makrostrukturierten Strömungsverteilerplatte und den Katalysatorschichten. Dazu müssen Bauteiltoleranzen ausgeglichen und der Kompressionsdruck verteilt werden. Die GDL dient auch als mechanischer Schutz der sehr dünnen Membranen, die in den Brennstoffzellen hohen Lasten ausgesetzt sind. Daher werden an die mechanischen Eigenschaften der GDL hohe Anforderungen gestellt.

Gasdiffusionslagen für Brennstoffzellen bestehen typischerweise aus einem Kohlefaser-Substrat, welches mit Fluor-Polymeren (z. B. PTFE) hydrophob ausgerüstet ist und anschließend mit einer mikroporösen Lage (MPL) flächig beschichtet wird. Die MPL besteht in der Regel aus einem fluorhaltigen Polymer als Binder (z. B. PTFE) sowie einem elektrisch leitfähigen Material, wobei häufig Kohlenstoffmaterialien, wie Ruß oder Graphit-Pulver, verwendet werden. Andere Ansätze zur Herstellung von MPLs verwenden z.B. Ruß in einem Binder auf Silikon oder PVA Basis.

Die Entwicklung von alltagstauglichen Brennstoffzellen ist ein wichtiger Betrag bei der Energiewende von fossilen zu nachhaltigen Brennstoffen. Es besteht daher aktuell ein großer Bedarf an PEM-Brennstoffzellen, die hinsichtlich des beschriebenen komplexen Eigenschaftsprofils verbessert sind.

Der WO 2021/099129 A1 liegt die Aufgabe zugrunde, die Nachteile, die aus den Gradienten bezüglich der chemischen Zusammensetzung und/oder der Betriebsparameter zwischen der Zuführung und Abführung der Betriebsmedien resultieren, zu vermindern bzw. zu vermeiden. Zur Lösung dieser Aufgabe wird eine Gasdiffusionslage eingesetzt, die in Bezug auf ihre Grundfläche (in der x,y-Ebene) einen Eigenschaftsgradienten aufweist, wodurch die Verteilung der Betriebsmedien durch die GDL verbessert wird.

Durch gezieltes Anpassen der GDL-Eigenschaften an die Gradienten der Betriebsmedien, wie sie von den Umgebungsbedingungen der Halbzellreaktionen vorgegeben werden, lässt sich die Leistung der Brennstoffzelle signifikant steigern. Insbesondere können die Schwankungen der Stromdichte über die aktive Fläche verringert werden.

Die WO 2022/002932 A1 beschreibt eine Gasdiffusionslage für eine Brennstoffzelle mit einer flächigen Ausdehnung und einer senkrecht zu der flächigen Ausdehnung gemessene Lagendicke, wobei sich mindestens eine der physikalischen Eigenschaften, ausgewählt unter Hydrophobizität und Permeabilität, von einem Anfangswert in einem Anfangsbereich zu einem Endwert in einem Endbereich in mindestens einer Richtung entlang der flächigen Ausdehnung ändert. Die Gasdiffusionslage kann eine darauf aufgebrachte mikroporöse Lage aufweisen. Konkret ist beschrieben, z.B. die Hydrophobizität über den Gehalt eines hydrophobierenden Materials (wie PTFE) und die Permeabilität durch die Porosität der Gasdiffusionslage zu steuern. Bei einer aufgebrachten mikroporösen Schicht kann ihre Dicke beeinflusst werden, was unter anderem zu einer sich ändernden lokalen Eindringtiefe in die Trägerschicht führt. Der elektrische Kontaktwiderstand, der elektrische Durchgangswiderstand, der Benetzungswinkel und die Hydrophobizität können angepasst werden, etwa durch Verwendung von unterschiedlichen lokalen Dichten oder Gehalten eines hydrophobierenden Materials. Die Porosität kann bei Verwendung eines Lasers zudem durch ein variables Bohrbild eingestellt werden. Die Offenbarung dieser Anmeldung ist wenig konkret und es fehlt sowohl an Angaben zur Ausführung der beschriebenen Konzepte, als auch einem nacharbeitbaren Ausführungsbeispiel sowie anwendungstechnischen Daten.

Die EP 3957789 A1 beschreibt eine Gasdiffusionslage, die trotz ihrer geringen Dichte eine hohe Wärmeleitfähigkeit aufweist und eine gute Handhabbarkeit und Zellleistung aufweist. Die GDL umfasst einen Kohlefaserfilz, der Kohlenstofffasern mit einem durchschnittlichen Faserdurchmesser von 5 bis 20 µm enthält, wobei mindestens ein Teil der Kohlenstofffasern, die den Kohlenstofffaserfilz bilden, einen flachen Teil aufweist, bei dem in einer ebenen Ansicht der Oberfläche des Kohlenstofffaserfilzes ein Maximalwert des Faserdurchmessers beobachtet wird, der 10 bis 50 % größer als der durchschnittliche Faserdurchmesser ist, und die Häufigkeit der flachen Teile an der Oberfläche des Kohlenstofffaserfilzes 50 bis 200/mm² beträgt.

GDLs werden beim Einsatz in Brennstoffzellen in der Regel stark verpresst (komprimiert). Die Eigenschaften von GDLs infolge einer Kompression können über den Anteil der elastischen und plastischen Verformung charakterisiert werden. Bei einer plastischen Verformung kehrt die Gasdiffusionslage nach einer Belastung nicht wieder zu 100% in die ursprüngliche Form zurück, sondern es bleibt eine permanente Formänderung. Die Eigenschaft eines Materials, seine Form permanent zu ändern, wenn eine Spannung angelegt wird, d.h. seine Verformbarkeit, wird auch mit dem Begriff "Setzen" bezeichnet. Materialien, die über eine geringe plastische Verformbarkeit verfügen, weisen ein geringes Setzverhalten auf. Das Setzverhalten der aus dem Stand der Technik bekannten GDLs ist noch verbesserungswürdig. Wird die GDL im Brennstoffzellenstapel unter hohen Drücken verspannt, so kommt es aufgrund der Verspannungskräfte und von dynamischen Kraftwechseln im Betrieb zum Setzen. Dies kann zu einem Verlust an Kompressionsdruck im Brennstoffzellenstapel führen, was die Materialwiderstände der meisten Komponenten und vor allem deren Übergangswiderstände im Stapel erhöht. Weiter kann eine Anpassung des Stapeldesigns erforderlich werden, wie der Einsatz zusätzlicher Federpakete zum Ausgleich des beim Setzen auftretenden Spannungsverlusts. Somit kann sich die Länge der Stapel und der notwendige Raum zu deren Einbau erhöhen. Des Weiteren können zusätzliche Maßnahmen bei der Stackmontage erforderliche werden, z.B. indem die Stapel beim Zusammenbau mehrfach verspannt und entlastet und erst danach fixiert werden, was den Fertigungsaufwand erhöht.

Der Erfindung liegt die Aufgabe zugrunde, die zuvor beschriebenen Nachteile zu vermeiden oder zumindest zu vermindern. Überraschenderweise wurde nun gefunden, dass Gasdiffusionslagen mit einem guten Eigenschaftsprofil, speziell bezüglich ihrer Transporteigenschaften, und mit einem signifikant verbesserten Setzverhalten erzielt werden können, wenn man der Gasdiffusionslänge einen Eigenschaftsgradienten bezüglich wenigstens einer chemischen und/oder physikalischen Eigenschaft in Bezug auf ihre Grundfläche (in der x,y-Ebene) verleiht und diese einer Nachbehandlung bei erhöhtem Druck und gegebenenfalls erhöhter Temperatur unterzieht. Somit kann der plastische Verformungsanteil der GDL deutlich reduziert werden. Überraschenderweise wurde gefunden, dass sich diese Nachbehandlung auch positiv auf die Gradienten auswirken kann. Speziell bei den Transporteigenschaften, wie der Gaspermeabilität und der Trockene Diffusionslänge, lass sich somit noch stärker ausgeprägte Gradienten erzielen.

### ZUSAMMENFASSUNG DER ERFINDUNG

Ein erster Gegenstand der Erfindung ist ein Verfahren zur Herstellung einer Gasdiffusionslage für eine Brennstoffzelle, umfassend
A) ein flächiges elektrisch leitfähiges Fasermaterial und
B) eine mikroporöse Lage auf wenigstens einer der Flächen des Fasermaterials, wobei die mikroporöse Lage in Bezug auf die Grundfläche der Gasdiffusionslage (in der x,y-Ebene) wenigstens einen Eigenschaftsgradienten bezüglich wenigstens einer chemischen und/oder physikalischen Eigenschaft aufweist,
bei dem man
i) ein flächiges elektrisch leitfähigen Fasermaterial A) bereitstellt,
ii) das in Schritt i) bereitgestellte Fasermaterial mit einem Precursor zur Ausbildung einer mikroporösen Lage B) beschichtet, wobei die Zusammensetzung des Precursors zur Erzeugung eines Gradienten variiert wird,
iii) das in Schritt ii) erhaltene beschichtete Fasermaterial einer Nachbehandlung bei erhöhtem Druck und gegebenenfalls erhöhter Temperatur unterzieht.

Ein weiterer Gegenstand der Erfindung ist eine Gasdiffusionslage, erhältlich durch ein Verfahren, wie zuvor und im Folgenden beschrieben.

Ein weiterer Gegenstand der Erfindung ist eine Gasdiffusionslage für eine Brennstoffzelle, umfassend
A) ein flächiges elektrisch leitfähiges Fasermaterial und
B) eine mikroporöse Lage auf wenigstens einer der Flächen des Fasermaterials,
wobei die Gasdiffusionslage in Bezug auf ihre Grundfläche (in der x,y-Ebene) wenigstens einen Eigenschaftsgradienten bezüglich wenigstens einer chemischen und/oder physikalischen Eigenschaft aufweist und die Gasdiffusionslage einer Nachbehandlung bei erhöhtem Druck und gegebenenfalls erhöhter Temperatur unterzogen wurde, so dass sie eine gegenüber einer nicht nachbehandelten Gasdiffusionslage eine verringerte plastische Verformbarkeit aufweist.

In einer speziellen Ausführung weist die Gasdiffusionslage gegenüber einer nicht nachbehandelten Gasdiffusionslage einen verringerten Compression Set-Wert auf.

Ein weiterer Gegenstand der Erfindung ist eine Brennstoffzelle, die wenigstens eine Gasdiffusionslage, wie zuvor und im Folgenden definiert, umfasst.

Ein weiterer Gegenstand der Erfindung ist die Verwendung einer Gasdiffusionslage, wie zuvor und im Folgenden definiert, oder erhältlich durch ein Verfahren, wie zuvor und im Folgenden definiert, in einer Protonenaustauschmembran-Brennstoffzelle.

### BESCHREIBUNG DER ERFINDUNG

Die erfindungsgemäßen und nach dem erfindungsgemäßen Verfahren erhaltenen Gasdiffusionslagen haben folgende Vorteile:
- Die Gasdiffusionslagen verfügen über ein signifikant verbessertes Setzverhalten. Durch die erfindungsgemäße Nachbehandlung bei erhöhtem Druck und gegebenenfalls erhöhter Temperatur kann der plastische Verformungsanteil der GDL deutlich reduziert werden.
- Konstruktive Maßnahmen zur Anpassung der Brennstoffzellenstapel an die mit dem Setzen der GDL verbundenen Folgen, wie ein verringerter Kompressionsdruck, erhöhte Materialwiderstände der verbauten Komponenten und ein Spannungsverlust können verringert oder es kann ganz auf diese verzichtet werden.
- Überraschenderweise wurde gefunden, dass sich die Nachbehandlung auch positiv auf die Gradienten auswirken kann. Speziell bei den Transporteigenschaften, wie der Gaspermeabilität und der Trockene Diffusionslänge, lassen sich noch stärker ausgeprägte Gradienten erzielen. Zudem führen die zur Erzeugung der Gradienten verwendeten Rohstoffe ohne Nachbehandlung zu einem stark plastischen Verformungsverhalten. Verschiedene Bereiche des Gradienten können ein unterschiedliches Setzverhalten aufweisen. Dies wird durch die erfindungsgemäße Nachbehandlung nicht nur deutlich minimiert, die unterschiedlichen Bereiche des Gradienten werden in der Regel auch homogenisiert.
- Durch den wenigstens einen Eigenschaftsgradienten, den die erfindungsgemä-ßen Gasdiffusionslagen aufweisen, können die Eigenschaften der GDL gezielt an die Betriebsbedingungen der jeweiligen Brennstoffhalbzelle angepasst werden. Die GDL zeichnet sich durch verbesserte Eigenschaften bezüglich der Verteilung der Betriebsstoffe aus. Speziell gelingt es, verschiedene Transportprozesse durch die GDL unabhängig voneinander zu steuern. So kann beispielsweise der Transport von flüssigem Wasser und von gasförmigem Wasser separat eingestellt werden. Auch der Sauerstofftransport durch die GDL zur Kathode lässt sich gezielt steuern.
- Die erfindungsgemäßen Gasdiffusionslagen lassen sich einfach und kostengünstig herstellen.
- Durch den Eigenschaftsgradienten der erfindungsgemäßen Gasdiffusionslagen können in den resultierenden Brennstoffzellen Schwankungen der Stromdichte über die aktive Fläche verringert werden.

Von einer plastischen Verformung spricht man, wenn ein Material, wie eine Gasdiffusionslage, nach einer Belastung nicht wieder zu 100% in die ursprüngliche Form zurücckehrt, sondern eine permanente Formänderung zurückbleibt. Ein Teil der Verformung ist elastisch und somit reversibel, nur ein bestimmter Teil ist plastisch und bleibt dauerhaft bestehen. Die Eigenschaft eines Materials, seine Form permanent zu ändern, wenn eine Spannung angelegt wird, d.h. seine Verformbarkeit, wird auch mit dem Begriff "Setzen" bezeichnet. Materialien, die über eine geringe plastische Verformbarkeit verfügen, weisen ein geringes Setzverhalten auf. Gasdiffusionslagen mit einem geringen Setzverhalten zeichnen sich durch geringe Compression Set-Werte aus. Der Compression-Set und Verfahren zu seiner Messung werden im Folgenden ausführlich beschrieben.

Das erfindungsgemäße Verfahren umfasst die folgenden Schritte:
i) Bereitstellen eines flächigen elektrisch leitfähigen Fasermaterials A),
ii) Beschichten des in Schritt i) bereitgestellten Fasermaterials mit einem Precursor zur Ausbildung einer mikroporösen Lage B), wobei die Zusammensetzung des Precursors zur Erzeugung eines Gradienten variiert wird,
iii) Nachbehandeln des in Schritt ii) erhaltenen beschichteten Fasermaterials bei erhöhtem Druck und gegebenenfalls erhöhter Temperatur.

Bezüglich der Fasermaterialien A) und der Precursoren und Bedingungen zur Ausbildung einer mikroporösen Lage B) wird auf die Ausführungen weiter unten in vollem Umfang Bezug genommen.

### iii) Nachbehandlung bei erhöhtem Druck und erhöhter Temperatur

In einer speziellen Ausführung erfolgt die die Behandlung in Schritt iii) bei erhöhtem Druck von wenigstens 0,5 MPa und erhöhter Temperatur von wenigstens 100°C.

Bevorzugt erfolgt die Behandlung in Schritt iii) bei einem Druck im Bereich von 5 bis 100 bar (0,5 bis 10,0 MPa), besonders bevorzugt von 15 bis 80 bar.

Bevorzugt erfolgt die Behandlung in Schritt iii) bei einer Temperatur im Bereich von 100 bis 350°C, besonders bevorzugt von 120 bis 330°C, insbesondere von 150 bis 320°C.

Bevorzugt erfolgt die Behandlung in Schritt iii) in einer Presse über einen Zeitraum von 5 Sekunden bis 5 Minuten, bevorzugt von 10 Sekunden bis 2 Minuten.

Bevorzugt erfolgt die Behandlung in Schritt iii) in einem Kalander über einen Zeitraum von größer 0 Sekunden bis 10 Sekunden, bevorzugt von 0,1 Sekunden bis 5 Sekunden.

Zur Nachbehandlung in Schritt iii) können übliche Vorrichtungen, wie Ein- oder Mehretagenpressen, Endlos-Bandpressen oder Kalander eingesetzt werden. In einer speziellen Ausführung wird zur Nachbehandlung in Schritt iii) wenigstens eine Doppelbandpresse eingesetzt. In einer weiteren speziellen Ausführung wird zur Nachbehandlung in Schritt iii) wenigstens ein Kalander eingesetzt.

Einetagenpressen oder Mehretagenpresse eignen sich speziell zur diskontinuierlichen Nachbehandlung von abschnittsförmigen Materialien. Doppelbandpressen eignen sich sowohl zur Behandlung endloser bahnförmiger Materialien, als auch von abschnittsförmige Materialien (Plattenmaterial). Doppelbandpressen besitzen zwei endlos umlaufende Pressbänder, zwischen denen die GDL-Bahn unter Einwirkung von Druck und gegebenenfalls auch Wärme bei gleichzeitigem Transport in Vorlaufrichtung nachbehandelt wird. Die Bänder sind parallel zueinander ausgerichtet und zwischen dem oberen und dem unteren Band befindet sich ein Spalt, der zur Anpassung an die Dicke des GDL-Materials und zur Einstellung der gewünschten Eigenschaften geöffnet und geschlossen werden kann.

In einer bevorzugten Ausführungsform erfolgt die Behandlung in Schritt iii) in einer Doppelbandpresse. Speziell erfolgt die Behandlung in Schritt iii) in einer Doppelbandpresse bei einem Druck im Bereich von 1 bis 8 MPa (10 bis 80 bar) und bei einer Temperatur im Bereich von 200 bis 350°C.

In einer weiteren bevorzugten Ausführungsform erfolgt die Behandlung in Schritt iii) in einem Kalander. Grundsätzlich können in Schritt iii) des erfindungsgemäßen Verfahrens bekannte und handelsübliche Kalander eingesetzt werden. So ist es möglich, Kalander mit 2, 3, 4 oder mehr als 4 Kalanderwalzen einzusetzen. In der einfachsten bevorzugten Ausführungsform ist der im erfindungsgemäßen Verfahren verwendete Kalander ein 2-Walzen-Kalander. Die Gasdiffusionslage kann einmal oder wiederholt, z. B. 1, 2, 3, 4, 5 oder mehr als 5 Mal, durch den Kalander geführt werden. Die Kalanderwalzen können in einer Geometrie angeordnet werden, die sich für das Kalandrieren der Gasdiffusionslagen eignet. Ein Zweiwalzenkalander kann eine vertikale, geneigte oder horizontale Anordnung der Walzen aufweisen. Ein Dreiwalzenkalander kann eine vertikale Anordnung, eine versetzt angeordnete Oberwalze oder versetzt angeordnete Unterwalze aufweisen. Ein Vierwalzenkalander kann eine L-Anordnung, eine umgekehrte L-Anordnung, eine S-Anordnung, eine Z-Anordnung oder eine andere Anordnung der Walzen aufweisen.

Vorzugsweise erfolgt die Behandlung in Schritt iii) in einem Kalander bei einem Liniendruck im Bereich von 5 bis 500 N/mm, vorzugsweise 10 bis 100 N/mm.

Vorzugsweise wird das Kalandrieren in Schritt iii) mit einer Bahngeschwindigkeit von 0,05 m/min bis 30 m/min durchgeführt.

Speziell erfolgt die Behandlung in Schritt iii) in einem Kalander bei einer Walzentemperatur im Bereich von 130 bis 220°C bei einem Liniendruck im Bereich von 8 bi 80 N/mm und einer Bahngeschwindigkeit von 1 bis 10 m/min.

### Flächiges elektrisch leitfähiges Fasermaterial A) und Gasdiffusionslage (GDL)

Im Rahmen der Erfindung bezeichnet ein Vlies allgemein ein Flächengebilde, das mehrheitlich aus vereinzelten Fasern besteht, deren Zusammenhalt im Wesentlichen nur durch die ihnen eigene Haftung gegeben ist. Die Umwandlung eines Vlieses in einen Vliesstoff durch das Erzeugen eines festeren Verbundes zwischen den Fasern als er im Vlies vorliegt, erfolgt durch Verfahren der Vliesverfestigung, die meist in mechanische, chemische und thermische Verfahren unterteilt werden. Vliese, Vliesstoffe und Verfahren zu ihrer Herstellung sind in H. Fuchs, W. Albrecht, Vliesstoffe, 2. Auflage, Wiley-VCH, Weinheim, Germany beschrieben.

Bei dem erfindungsgemäß eingesetzten flächigen elektrisch leitfähigen Material A) und der Gasdiffusionslage handelt es sich um ein flächenförmiges Gebilde, das über eine im Wesentlichen zweidimensionale, ebene Ausdehnung und eine demgegenüber geringere Dicke verfügt. Die erfindungsgemäße Gasdiffusionslage weist eine Grundfläche auf, die in der Regel im Wesentlichen der Grundfläche der angrenzenden Membran mit den Katalysatorschichten und der Grundfläche der angrenzenden Strömungsverteilerplatte entspricht. Die Form der Grundfläche der Gasdiffusionslage kann beispielsweise polygonal (n-eckig mit n ≥3, z. B. dreieckig, viereckig, fünfeckig, sechseckig, etc.), kreisförmig, kreissegmentförmig (z. B. halbkreisförmig), ellipsenförmig oder ellipsensegmentförmig sein. Bevorzugt ist die Grundfläche rechteckig oder kreisförmig. Im Rahmen der Erfindung wird zur Beschreibung der GDL ein orthogonales Koordinatensystem verwendet, wobei die Grundfläche der GDL in der von der x-Achse und der y-Achse aufgespannten Ebene (auch als x,y-Ebene bezeichnet) liegt. Die dazu orthogonale z-Achse dient zur Beschreibung der Materialdicke. Gemäß der für Faserverbundmaterialien üblichen Beschreibung werden die x-Achse auch als Rollenrichtung (machine direction, MD) und die y-Achse als Gegenrollenrichtung (cross machine direction, CMD) beschrieben. In Richtung der z-Achse erfolgt im Wesentlichen der Stofftransport zwischen Strömungsverteilerplatte und Membran.

Die Gasdiffusionslage weist erfindungsgemäß wenigstens einen Eigenschaftsgradienten bezüglich wenigstens einer chemischen und/oder physikalischen Eigenschaft auf. Das heißt, wenigstens eine Eigenschaft der Gasdiffusionslage ist vom Ort abhängig. Der Eigenschaftsgradient kann sich über eine, zwei oder alle drei Raumrichtungen erstrecken. Er kann sich jeweils über die vollständige Längenausdehnung in einer Raumrichtung oder einen bestimmten Abschnitt erstrecken. Die Eigenschaftsänderung kann sprunghaft sein (d. h. die erfindungsgemäße Gasdiffusionslage weist eine Heterogenität bezüglich wenigstens einer Eigenschaft auf) oder kontinuierlich sein (d. h. die erfindungsgemäße Gasdiffusionslage weist eine Inhomogenität bezüglich wenigstens einer Eigenschaft auf). Eine sprunghafte Eigenschaftsänderung weist in der Regel wenigstens 2, bevorzugt wenigstens 3, insbesondere wenigstens 4 Stufen hinsichtlich der den Gradienten aufweisenden Eigenschaft auf. Sowohl das flächige Fasermaterial A), als auch die mikroporöse Lage B), als auch beide können den wenigstens einen Eigenschaftsgradienten aufweisen.

Bevorzugt weist zumindest die mikroporöse Lage B) wenigstens einen Eigenschaftsgradienten auf. Bevorzugt weisen zumindest die kathodenseitigen Gasdiffusionslagen der erfindungsgemäßen Brennstoffzellen eine MPL auf, die in Bezug auf die Grundfläche (in der x,y-Ebene) der GDL einen Eigenschaftsgradienten aufweist. Es wurde gefunden, dass durch den Einsatz einer MPL, die in Bezug auf die Grundfläche (in der x,y-Ebene) der GDL einen Eigenschaftsgradienten aufweist, eine gleichmäßigere Stromdichteverteilung der Brennstoffzelle erzielt werden kann. In einer speziellen Ausführungsform weist ausschließlich die mikroporöse Lage einen oder mehrere Eigenschaftsgradienten auf.

Bevorzugt weist die Gasdiffusionslage (d.h. das flächige Fasermaterial A) und/oder die mikroporöse Lage B)) wenigstens einen Eigenschaftsgradienten auf, der sich in Abhängigkeit vom Ort monoton ändert. Unter einer monotonen Eigenschaftsänderung wird verstanden, dass der Funktionswert, der die Eigenschaftsänderung repräsentiert entweder immer wächst oder immer fällt, wenn der Wert für die Ortskoordinate zunimmt. Dabei ist es zugelassen, dass der Funktionswert, der die Eigenschaftsänderung repräsentiert, im Verlauf der Ortskoordinate auch über einen Teilbereich oder über mehrere Teilbereiche gleich bleibt. Er weist jedoch keine lokalen Minima oder Maxima auf.

Bevorzugt weist die Gasdiffusionslage (d.h. nur das flächige Fasermaterial A) oder nur die mikroporöse Lage B) oder das flächige Fasermaterial A) und die mikroporöse Lage B) nur Eigenschaftsgradienten auf, die sich in Abhängigkeit vom Ort monoton ändern.

Bevorzugt weist zumindest die mikroporöse Lage B) wenigstens einen Eigenschaftsgradienten auf, der sich in Abhängigkeit vom Ort monoton ändert. In einer speziellen Ausführungsform weist ausschließlich die mikroporöse Lage wenigstens einen Eigenschaftsgradienten auf, der sich in Abhängigkeit vom Ort monoton ändert. In einer weiteren speziellen Ausführungsform weist die mikroporöse Lage ausschließlich Eigenschaftsgradienten auf, die sich in Abhängigkeit vom Ort monoton ändern. Spezieller weist die mikroporöse Lage nur einen einzigen Eigenschaftsgradienten auf und ändert sich dieser eine Eigenschaftsgradient in Abhängigkeit vom Ort monoton.

Die Gasdiffusionslage umfasst als Komponente A) wenigstens ein elektrisch leitfähiges flächiges Fasermaterial. Bevorzugt umfasst die Komponente A) ein Fasermaterial, das ausgewählt ist unter Vliesen, Papieren, Geweben und Kombinationen davon. Geeignete Substratmaterialen sind Fasermaterialen, die selbst leitfähig sind oder durch Zugabe leitfähiger Additive, wie Kohlenstoff- oder Metallpartikel, leitfähig gemacht werden. Als Substratmaterial eignen sich prinzipiell Kohlenstofffasern, Glasfasern, Fasern organischer Polymere, wie Polypropylen, Polyester, Polyphenylensulfid, Polyetherketonen, und Mischungen davon. Die in dem Fasermaterial A) enthaltenen Fasern umfassen oder bestehen vorzugsweise aus Kohlenstofffasern (Kohlefasern, Carbonfasern). Solche Fasermaterialien erfüllen besonders vorteilhaft die Anforderung an die GDL nach Gasdiffusivität, Flüssigwasserpermeabilität, elektrischer und thermischer Leitfähigkeit. Das Fasermaterial A) ist vorzugsweise ausgewählt unter Kohlefaser-Geweben, Kohlefaser-Papieren und Kohlefaser-Vliesstoffen. In einer bevorzugten Ausführungsform umfasst das Fasermaterial A) wenigstens einen Kohlefaser-Vliesstoff oder besteht das Fasermaterial A) aus einem Kohlefaser-Vliesstoff.

Die Herstellung der Kohlenstofffasern kann in üblicher Weise erfolgen, wobei als Ausgangsmaterial vorzugsweise Polyacrylnitril-Fasern (PAN-Fasern) eingesetzt werden. PAN-Fasern werden hergestellt durch radikalische Polymerisation einer Monomerzusammensetzung, die vorzugsweise wenigstens 90 Gew.-%, bezogen auf das Gesamtgewicht der zur Polymerisation eingesetzten Monomere, Acrylnitril enthält. Die erhaltene Polymerlösung wird, z. B. durch Nassspinnen und Koagulation, zu Filamenten versponnen und zu Tauen zusammengefasst. Bevor dieser PAN-Precursor unter hohen Temperaturen zu Kohlenstoffasern umgewandelt wird, wird er in der Regel in einer sauerstoffhaltigen Atmosphäre bei erhöhten Temperaturen von etwa 180 bis 300 °C einer oxidativen Cyclisierung (auch kurz als Oxidation bezeichnet) unterzogen. Durch die dabei resultierende chemische Vernetzung wird die Formstabilität der Fasern verbessert. Anschließend erfolgt bei Temperaturen von wenigstens 1200 °C die eigentliche Pyrolyse zu Kohlenstofffasern. Für diese Pyrolyse können in Abhängigkeit von der Form des angestrebten Fasermaterials entweder die Ausgangsfasern oder bereits ein flächiges Fasermaterial eingesetzt werden. In Abhängigkeit von der Temperatur bei der Pyrolyse unterscheidet man zwischen Carbonisierung und Graphitisierung. Carbonisierung bezeichnet eine Behandlung bei etwa 1200 bis 1500 °C unter Inertgasatmosphäre, die zur Abspaltung flüchtiger Produkte führt. Durch Graphitisierung, d. h. Erhitzen auf etwa 2000 bis 3000 °C unter Inertgas, erhält man so genannte Hochmodul- oder Graphitfasern. Diese Fasern verfügen über eine hohe Reinheit, sind leicht, hoch fest und sehr gut leitfähig für Elektrizität und Wärme.

Das Fasermaterial A) ist vorzugsweise ausgewählt unter Kohlefaser-Geweben, Kohlefaser-Papieren und Kohlefaser-Vliesstoffen.

Bei Kohlefasergeweben wird das flächige Fasermaterial durch das Verkreuzen von zwei Fadensystemen, Kette (Kettfäden) und Schuss (Schussfäden), hergestellt. Wie bei Textilien werden Faserbündel flexibel, aber unlösbar miteinander verbunden. Zur Herstellung von Kohlefasergeweben werden vorzugsweise oxidierte, aber noch nicht karbonisierte oder graphitierte PAN-Fasern eingesetzt. Die Karbonisierung oder Graphitierung, um dem flächigen Fasermaterial elektrische Leitfähigkeit zu verleihen, erfolgt nach dem Weben.

Wie eingangs beschrieben, werden zur Herstellung von Kohlefaser-Papieren in der Regel oxidierte PAN-Fasern eingesetzt. Diese werden in an sich bekannter Weise zu Faserbruchstücken zerkleinert, aufgeschlämmt und analog zur Papierherstellung durch Sieben (Bütten) ein Fasergelege hergestellt und getrocknet. In einer bevorzugten Ausführung wird in das Papier zusätzlich wenigstens ein Bindemittel eingebracht. Geeignete Bindemittel sind z. B. Phenol-, Furan-, Polyimidharze, etc. Zum Einbringen des Bindemittels kann das Papier mit diesem imprägniert und das Bindemittel gegebenenfalls anschließend gehärtet werden. Nach dem Imprägnieren und Härten wird das Kohlefaser-Papier nochmals einer Karbonisierung/Graphitisierung unterzogen, um auch das Bindemittel in Verbindungen mit verbesserter elektrischer Leitfähigkeit zu überführen. In einer weiteren geeigneten Ausführung wird zur Bereitstellung des Fasermaterials A) ein gefülltes Kohlefaser-Papier eingesetzt. Die Herstellung erfolgt zunächst wie zuvor beschrieben, jedoch wird anstelle des Einbringens eines Bindemittels und der Karbonisierung/Graphitisierung ein Füllstoff aus einem Kohlenstoffmaterial in einem polymeren Binder in das noch feuchte Papier eingebracht. Speziell wird dazu ein Kohlenstoff-PTFE-Füllstoff eingesetzt. Durch diese Füllung wird die thermische und elektrische Leitfähigkeit so erhöht, dass eine Karbonisierung/Graphitisierung entfallen kann.

Zur Herstellung von Kohlefaser-Vliesstoffen können nicht oxidierte oder oxidierte PAN-Fasern eingesetzt werden. Diese können in einem ersten Schritt trocken zu einem Flor gelegt (kardiert) und anschließend zu einem Vliesstoff verfestigt werden. Dies kann beispielsweise durch Wasserstrahlverfilzung (hydro-entangling) erfolgen, wobei die Karbonfasern orientiert, verschränkt und somit mechanisch stabilisiert werden. Gegebenenfalls kann die Dicke des verfestigten Vliesstoffs auf einen gewünschten Wert kalibriert werden. Vliesstoffe auf Basis nicht oxidierter PAN-Fasern werden nach dem Vlieslegen und Verfestigen zunächst der Oxidation bei erhöhter Temperatur und unter Sauerstoffatmosphäre und anschließend der Karbonisierung/Graphitisierung unter Inertgasatmosphäre unterzogen. Vliesstoffe auf Basis oxidierter PAN-Fasern werden nach dem Vlieslegen und Verfestigen nur einer Karbonisierung/Graphitisierung unterzogen. Optional kann in das Vlies zusätzlich wenigstens ein Bindemittel eingebracht und dieses gegebenenfalls anschließend gehärtet werden. Geeignete Bindemittel sind die für Kohlefaser-Papiere genannten, speziell Phenolharze. Das Einbringen des Bindemittels kann sich z. B. an die Karbonisierung/Graphitisierung anschließen und das erhaltene imprägnierte Vlies abschließend nochmals karbonisiert/graphitisiert werden.

In einer speziellen Ausführungsform umfasst das flächige elektrisch leitfähige Fasermaterial A) wenigstens einen Kohlefaser-Vliesstoff. Diese sind unter Anderem vorteilhaft, da sie kompressionselastisch sind und einfach großtechnisch, z. B. in einem Rolle-zu-Rolle-Verfahren, hergestellt werden können.

Bei dem Fasermaterial A) handelt es sich in der Regel um einen Faserverbundwerkstoff, umfassend:
a1) Kohlenstofffasern,
a2) gegebenenfalls wenigstens ein polymeres Bindemittel und/oder ein Pyrolyseprodukt davon,
a3) gegebenenfalls wenigstens ein weiteres, von a2) verschiedenes Additiv.

Die in der Gasdiffusionslage enthaltenen Fasermaterialien A) können übliche Additive a3) enthalten. Diese sind vorzugsweise ausgewählt unter Hydrophobisierungsmitteln, leitfähigkeitsverbessernden Additiven, oberflächenaktiven Substanzen und Mischungen davon.

Um die Transportvorgänge durch die GDL und an den Grenzflächen zu verbessern, kann es vorteilhaft sein, die Hydrophobizität des Fasermaterials A) zu erhöhen. Geeignete Hydrophobisierungsmittel sind fluorhaltige Polymere, wie Polytetrafluorethylen (PTFE) und Tetrafluorethylen-Hexafluorpropylen-Copolymere (FEP). Bevorzugt wird als Hydrophobisierungsmittel PTFE eingesetzt. Das Fasermaterial kann durch übliche Imprägnierungsverfahren mit dem Hydrophobierungsmittel ausgerüstet werden. Dazu kann eine PTFE-Dispersion in einem Tauchbad appliziert, das Lösungsmittel verdampft und das behandelte Fasermaterial bei erhöhten Temperaturen von in der Regel wenigstens 300 °C gesintert werden.

Bevorzugt weist das Fasermaterial A) einen Gehalt an Hydrophobierungsmitteln von 3 bis 40 Gew.-%, bezogen auf das Gesamtgewicht des Fasermaterials A), auf. In einer speziellen Ausführungsform weist das Fasermaterial einen Gehalt an PTFE von 3 bis 40 Gew.-%, bezogen auf das Gesamtgewicht des Fasermaterials A), auf.

Zur Verbesserung der elektrischen und der thermischen Leitfähigkeit kann das Fasermaterial A) mit wenigstens einem leitfähigkeitsverbessernden Additiv ausgerüstet werden. Geeignete leitfähigkeitsverbessernde Additive sind z. B. Metallpartikel, Kohlenstoffpartikel, etc. Bevorzugt ist das leitfähigkeitsverbessernde Additiv ausgewählt unter Ruß, Graphit, Graphen, Kohlenstoffnanoröhren (CNT), Kohlenstoffnanofasern und Mischungen davon. Die Ausrüstung des Fasermaterials A) mit wenigstens einem leitfähigkeitsverbessernden Additiv kann beispielsweise gemeinsam mit dem Hydrophobierungsmittel, speziell einer PTFE-Dispersion, erfolgen. Vielfach verfügt das Fasermaterial A) durch die eingesetzten Kohlenstofffasern auch ohne leitfähigkeitsverbessernde Additive über eine gute elektrische und thermische Leitfähigkeit.

Bevorzugt weist das Fasermaterial A) einen Gehalt an leitfähigkeitsverbessernden Additiven von 0 bis 40 Gew.-%, bezogen auf das Gesamtgewicht des Fasermaterials A), auf. Wenn das Fasermaterial A) ein leitfähigkeitsverbesserndes Additiv enthält, dann vorzugsweise in einer Menge von 0,1 bis 40 Gew.-%, besonders bevorzugt von 0,5 bis 30 Gew.-%, bezogen auf das Gesamtgewicht des Fasermaterials A), auf.

Das Fasermaterial A) weist vorzugsweise eine Dicke im Bereich von 50 bis 750 µm, besonders bevorzugt von 100 bis 500 µm auf. Diese Dicke bezieht sich auf den unkomprimierten Zustand des Fasermaterials A), d. h. vor der Nachbehandlung in Schritt iii) und vor dem Einbau der GDL in eine Brennstoffzelle.

Das Fasermaterial A) weist vorzugsweise eine Porosität im Bereich von 10 bis 90 %, besonders bevorzugt von 20 bis 85 %, auf. Die Porosität des Fasermaterials lässt sich bei bekannter Faserdichte aus der gemessenen Dicke und dem gemessenen Flächengewicht berechnen. So gilt für eine Kohlenstoff-Faserdichte von 1,8 g/cm³: Porosität [%] = [(1,8-Flächengewicht/Dicke)/1,8] x 100. Weiterhin besteht die Möglichkeit, die Dichte der Gasdiffusionslage per Helium-Dichtemessung und das spezifische Porenvolumen per Quecksilber-Porosimetrie zu bestimmen. Die Porosität berechnet sich dann wie folgt: Porosität [%] = spezifisches Porenvolumen / (spezifisches Porenvolumen + 1 / He-Dichte) x 100 %.]

Der mittlere Porendurchmesser des Fasermaterials A) liegt vorzugsweise in einem Bereich von 5 bis 60 µm, besonders bevorzugt von 8 bis 50 µm, insbesondere von 10 bis 40 µm. Die Bestimmung des mittleren Porendurchmessers kann durch Quecksilber-Porosimetrie erfolgen.

Die erfindungsgemäße Gasdiffusionslage besteht aus einem zwei- oder mehrlagigen Schichtverbund auf Basis eines flächigen, elektrisch leitfähigen Fasermaterials A) und einer mikroporösen Lage (MPL) B) auf einer der Flächen des Fasermaterials A).

Im Gegensatz zum makroporösen Fasermaterial A) ist die MPL B) mikroporös mit Porendurchmessern, die in der Regel deutlich unter einem Mikrometer liegen, bevorzugt von höchstens 900 nm, besonders bevorzugt von höchstens 500 nm, insbesondere von höchstens 300 nm. Der mittlere Porendurchmesser der MPL B) liegt vorzugsweise in einem Bereich von 5 bis 200 nm, besonders bevorzugt von 10 bis 100 nm. Die Bestimmung des mittleren Porendurchmessers kann wiederum durch Quecksilber-Porosimetrie erfolgen. Die zuletzt genannten mittleren Porendurchmesser gelten vor allem für den Einsatz von Ruß als leitfähige Partikel in der MPL. Durch den Einsatz von Graphit als leitfähige Partikel in der MPL oder den Einsatz von Porenbildnern lassen sich auch deutlich größere MPL-Poren erzeugen. Je nach Zusammensetzung ist der mittlere Porendurchmesser dann z. B. größer als 1 µm.

Die MPL enthält leitfähige Kohlenstoffpartikel, vorzugsweise Ruß oder Graphit, in einer Matrix aus einem polymeren Binder. Bevorzugte Binder sind die zuvor genannten fluorhaltigen Polymere, speziell Polytetrafluorethylen (PTFE).

Die mikroporöse Lage B) weist vorzugsweise eine Dicke im Bereich von 5 bis 150 µm, besonders bevorzugt von 10 bis 100 µm auf. Diese Dicke bezieht sich auf den unkomprimierten Zustand der mikroporösen Lage B), d. h. vor der Nachbehandlung in Schritt iii) und vor dem Einbau der GDL in eine Brennstoffzelle.

Das Vorhandensein der MPL hat einen großen Einfluss auf den Wasserhaushalt der Brennstoffzelle. Aufgrund des hohen PTFE-Anteils und der kleineren Poren der MPL wird die Flutung der GDL und der Elektrode erschwert, indem die MPL als Flüssigwasserbarriere fungiert und somit den Massentransport der gasförmigen Reaktanden an den Katalysator begünstigt. Es hat sich gezeigt, dass es vorteilhaft sein kann, wenn in der erfindungsgemäßen Gasdiffusionslage die mikroporöse Lage einen Eigenschaftsgradienten in Bezug auf ihre Grundfläche (in der x,y-Ebene) der GDL aufweist.

Die erfindungsgemäße Gasdiffusionslage weist vorzugsweise eine Dicke (Gesamtdicke aus Fasermaterial A) und MPL B)) im Bereich von 75 bis 1000 µm, besonders bevorzugt von 100 bis 500 µm auf. Diese Dicke bezieht sich auf den unkomprimierten Zustand der GDL, d. h. vor der Nachbehandlung in Schritt iii) und vor ihrem Einbau in eine Brennstoffzelle.

Weiterhin besitzen die Gasdiffusionsschichten bevorzugt eine hohe Gesamtporosität. Diese liegt vorzugsweise im Bereich von 20 % bis 80%, bestimmt, wie zuvor beschrieben, durch Helium-Dichtemessung und Quecksilber-Porosimetrie.

### Verfahren zur Herstellung einer Gasdiffusionslage

### Schritt i)

Bezüglich der in Schritt i) eingesetzten geeigneten und bevorzugten Fasermaterialien A) wird auf die vorherigen Ausführungen in vollem Umfang Bezug genommen.

### Schritt ii)

Die in Schritt ii) eingesetzten Precursoren enthalten vorzugsweise wenigstens ein fluorhaltiges Polymer, wenigstens ein Kohlenstoffmaterial und gegebenenfalls wenigstens einen Porenbildner. Die fluorhaltigen Polymere sind vorzugsweise ausgewählt unter Polytetrafluorethylen (PTFE) und Tetrafluorethylen-Hexafluorpropylen-Copolymeren (FEP). Bevorzugt wird PTFE eingesetzt. Bevorzugt ist das Kohlenstoffmaterial ausgewählt unter Ruß, Graphit, Graphen, Kohlenstoffnanoröhren (CNT), Kohlenstoffnanofasern und Mischungen davon. Bevorzugt wird Ruß oder Graphit eingesetzt. In einer speziellen Ausführung enthalten die in Schritt b) eingesetzten Precursoren wenigstens einen Porenbildner. Geeignete Porenbildner sind kommerziell erhältliche Kunststoffpartikel, z. B. aus Polymethylmethacrylat (PMMA). Eine geeignete Teilchengröße liegt im Bereich von 10 bis 100 µm.

Bevorzugt beträgt der Volumenanteil der Poren in der fertigen mikroporösen Schicht, der auf den Einsatz eines Porenbildners zurückzuführen ist, 0 bis 70 Volumen-%, bezogen auf das Gesamtvolumen der Poren in der fertigen mikroporösen Schicht.

Bevorzugt wird das Fasermaterial A) mit wenigstens 2, bevorzugt wenigstens 3, insbesondere wenigstens 4 lateral aneinandergrenzenden Streifen von Precursoren unterschiedlicher Zusammensetzung zur Ausbildung einer mikroporösen Lage beschichtet. Auftragen der MPL kann auf verschiedene Arten erfolgen. Während in einer diskontinuierlichen Herstellung häufig Sprüh-, Siebdruck- oder Meyer-Rod-Verfahren eingesetzt werden, kommen bei der kontinuierlichen Beschichtung bevorzugt Rakel-, Schlitzdüsen- und Gravurwalzenprozesse zum Einsatz. Dabei können die MPL-Schichtdicke und die Eindringtiefe durch die Beschichtungsprozessparameter sowie die Viskosität der Beschichtung beeinflusst werden. Abschließend erfolgt eine erneute thermische Behandlung, z. B. in einem Trocknungs- und Sinterofen. Dabei kann zunächst eine Trocknung bei einer Temperatur von 100 bis 200 °C und anschließend eine Sinterung bei einer Temperatur von 300 bis 500 °C erfolgen.

### Eigenschaftsgradient

Wie zuvor erwähnt, können sowohl das flächige Fasermaterial A), als auch die mikroporöse Lage B), als auch beide wenigstens einen Eigenschaftsgradienten aufweisen.

Die Eigenschaft, die den Gradienten aufweist, ist prinzipiell ausgewählt unter
- der chemischen Zusammensetzung des flächigen Fasermaterials A) und/oder der mikroporösen Lage B),
- den mechanischen Eigenschaften des flächigen Fasermaterials A) und/oder der mikroporösen Lage B),
- den Transporteigenschaften des flächigen Fasermaterials A) und/oder der mikroporösen Lage B),
- Kombinationen davon.

Zu den chemischen Eigenschaften des flächigen Fasermaterials A) und/oder der mikroporösen Lage B), die einen Gradienten aufweisen können, zählen z. B. der Gehalt an Hydrophobierungsmitteln, Kohlenstoffpartikeln, etc. Dazu zählt speziell der Gehalt an PTFE, Ruß, Graphit, Graphen, Kohlenstoffnanoröhren (CNT), Kohlenstoffnanofasern und Mischungen davon.

Zu den mechanischen Eigenschaften des flächigen Fasermaterials A) und/oder der mikroporösen Lage B), die einen Gradienten aufweisen können, zählen z. B. die Dichte, die flächenbezogene Masse, die Porosität und der mittlere Porendurchmesser.

Die Bestimmung der Dichte in g/m³ kann durch Helium-Dichtemessung, wie zuvor beschrieben, erfolgen.

Die Bestimmung der flächenbezogenen Masse in g/m² kann nach ISO 9073-1 bzw. EN 29073-1:1992 erfolgen.

Die Bestimmung der Porosität und der Porengrößenverteilung kann mittels Quecksilberporosimetrie erfolgen, wie dies in der DIN ISO 15901-1:2019-03 und ISO 15901-1:2016- Teil 1: Quecksilberporosimetrie, beschrieben ist.

Zur Erzeugung eines Gradienten bei den mechanischen Eigenschaften kann man beispielsweise das Kompressionsverhalten der mikroporösen Schicht mit einem Gradienten versehen, indem man deren Zusammensetzung bezüglich wenigstens eines ihrer Materialen variiert. Dadurch ändert sich auch die Anbindung an die Elektrode. Alternativ kann ein Gradient bei den mechanischen Eigenschaften erzeugt werden, indem man bei der Vliesverfestigung durch Wasserstrahlen einen Gradienten über die Materialbreite erzeugt. Dadurch werden mechanische Eigenschaften und der Wassertransport beeinflusst.

Zu den Transporteigenschaften des flächigen Fasermaterials A) und/oder der mikroporösen Lage B), die einen Gradienten aufweisen können, zählen:
- die Gaspermeabilität des flächigen Fasermaterials A) und/oder der mikroporösen Lage B),
- die Flüssigkeitspermeabilität des flächigen Fasermaterials A) und/oder der mikroporösen Lage B),
- der elektrische Durchgangswiderstand der Gasdiffusionslage durch die Materialebene,
- der thermische Durchgangswiderstand der Gasdiffusionslage durch die Materialebene,
- die trockene Diffusionslänge.

In einer bevorzugten Ausführungsform weist die mikroporöse Lage (MPL) wenigstens einen Eigenschaftsgradienten bezüglich wenigstens einer chemischen und/oder physikalischen Eigenschaft auf. Dies umfasst insbesondere die mechanischen Eigenschaften und Transporteigenschaften. Die MPL weist den wenigstens einen Eigenschaftsgradienten in Bezug auf ihre Grundfläche, d. h. in der Draufsicht bzw. in der x,y-Ebene, auf. Gegebenenfalls kann die MPL zusätzlich einen Eigenschaftsgradienten senkrecht zu ihrer Grundfläche, d. h. in Richtung der z-Achse, aufweisen.

Bevorzugt weist die mikroporöse Lage wenigstens 2, vorzugsweise wenigstens 3, insbesondere wenigstens 4, speziell wenigstens 5, spezieller wenigstens 6 diskrete Bereiche auf, die sich in wenigstens einer Eigenschaft unterscheiden. In dieser Ausführung ist Eigenschaftsänderung zwischen den Bereichen sprunghaft. Die einzelnen Bereiche können sich alle hinsichtlich derselben Eigenschaft oder (bei mehreren unterschiedlichen Eigenschaften) denselben Eigenschaften unterscheiden. Dies ist bevorzugt. Es ist jedoch auch möglich, dass sich zwei oder mehrere Bereiche hinsichtlich verschiedener Eigenschaften unterscheiden. In einer speziellen Ausführungsform weist die mikroporöse Lage wenigstens 2, vorzugsweise wenigstens 3, insbesondere wenigstens 4, speziell wenigstens 5, spezieller wenigstens 6 diskrete Bereiche auf, die sich alle hinsichtlich ein und derselben Eigenschaft unterscheiden.

In einer speziellen Ausführung ist jeder einzelne Bereich bezüglich seiner Eigenschaften im Wesentlichen homogen. Unter im Wesentlichen homogen wird dabei verstanden, dass innerhalb eines Bereichs nur solche Eigenschaftsschwankungen auftreten, wie sie auch dann (z. B. herstellungsbedingt) auftreten, wenn nicht bewusst ein Gradient erzeugt wird.

In einer alternativen Ausführungsform weist die mikroporöse Lage wenigstens einen kontinuierlichen Eigenschaftsgradienten auf.

Bevorzugt weist die mikroporöse Lage wenigstens 2, vorzugsweise wenigstens 3, insbesondere wenigstens 4 lateral aneinandergrenzende Streifen auf, die sich in wenigstens einer Eigenschaft unterscheiden. In einer speziellen Ausführungsform weist die mikroporöse Lage wenigstens 2, vorzugsweise wenigstens 3, insbesondere wenigstens 4 lateral aneinandergrenzende Streifen auf, die sich alle hinsichtlich ein und derselben Eigenschaft unterscheiden. Speziell ist jeder einzelne Streifen bezüglich seiner Eigenschaften im Wesentlichen homogen.

Bevorzugt ist die Eigenschaft der mikroporösen Lage, die einen Gradienten aufweist, ausgewählt unter
- der Gaspermeabilität nach Gurley und
- der trockenen Diffusionslänge.

### Physikalische Größen, Messverfahren

Die Gaspermeabilität senkrecht zur Materialebene kann über eine Gurley-Messung ermittelt werden, für die ein automatisiertes Gurley-Densometer der Firma Gurley Precision Instruments verwendet kann. Bei der Messung wird die Zeit in Sekunden ermittelt, bis 100 cm³ Luft bei konstanter Druckdifferenz senkrecht durch die GDL-Probe mit einer durchströmten Probenfläche von 6,42 cm² geströmt sind. Die Bestimmung der Luftdurchlässigkeit nach Gurley ist in der ISO 5636-5 beschrieben.

Die Messung der Gaspermeabilität in l/m² s kann auch nach DIN EN ISO 9237:1995-12 zur Bestimmung der Luftdurchlässigkeit von textilen Flächengebilden erfolgen.

Die Permeabilität für Flüssigkeiten, speziell für flüssiges Wasser, senkrecht zur Materialebene (Flüssig-Wasser-Permeabilität "through-plane") kann mit einer sogenannten "Filtration cell" oder nach der "Penn State"-Methode bestimmt werden [siehe Literaturstellen a - c]: [a] I. S. Hussaini and C. Y. Wang, "Measurement of relative permeability of fuel cell diffusion media," Journal of Power Sources, vol. 195, pp. 3830-3840, 2010; [b] J. D. Sole, "Investigation of water transport parameters and processes in the gas diffusion layer of PEMFCs," Virginia Polytechnic Institute, 2008; [c] J. Benziger, J. Nehlsen, D. Blackwell, T. Brennan, and J. Itescu, "Water flow in the gas diffusion layer of PEM fuel cells," Journal of Membrane Science, vol. 261, pp. 98-106, 2005.

Die Bestimmung des (spezifischen) elektrischen Widerstandes durch die Ebene (through plane, TP) kann durch 4-Punkt-Messung in literaturbekannter Weise erfolgen.

Die trockene Diffusionslänge bezeichnet die tatsächliche Länge der Strecke, die ein Gasmolekül durch das flächige Fasermaterial A) und/oder die mikroporöse Lage B) in µm zurücklegt. Sie wird bestimmt mittels stationärer Wicke-Kallenbach-Zelle.

Für die Bestimmung des thermischen Widerstandes durch die Ebene (through plane, TP) können zwei bekannte Prüfverfahren verwendet werden, das Heat-Flow-Verfahren oder die Laser-Flash-Methode.

Der Compression Set-Wert ist ein Maß dafür, wie sich ein Material, vorliegend eine GDL, bei einer Druckverformung und anschließender Entspannung verhält. GDLs werden beim Einsatz in Brennstoffzellen in der Regel stark verpresst (komprimiert). Zur Charakterisierung der Eigenschaften einer GDL infolge der Kompression kann der Anteil der elastischen und plastischen Verformung (sowie gegebenenfalls die Angabe weiterer physikalischer Größen, wie die Gasdurchlässigkeit und der elektrische Widerstand) herangezogen werden. Von einer plastischen Verformung spricht man, wenn ein Material nach einer Belastung nicht wieder zu 100% in die ursprüngliche Form zurücckehrt, sondern eine permanente Formänderung zurückbleibt. Der Compression Set ist die bleibende Verformung, die nach Aufhebung der einwirkenden Kraft verbleibt.

Die Bestimmung des Compression Set-Werts kann in der folgenden Art und Weise erfolgen. Es ist möglich, gleichzeitig die Werte weiterer physikalischer Größen, wie der Dicke, der Gasdurchlässigkeit, des elektrischen Widerstands, jeweils bei einer bestimmten Druckkraft und nach einmaliger oder mehrfacher Krafteinwirkung zu bestimmen.

Aus der zu prüfenden GDL werden über die gesamte Breite drei Proben (links, rechts und Mitte) entnommen aus denen ein Mittelwert gebildet wird. Weist das Material herstellungsbedingt eine Maschinenrichtung auf, so werden die Proben senkrecht zur Maschinenrichtung entnommen (CMD). Die Proben sind ringförmig mit einem inneren Durchmesser von 45 mm und einem äußeren Durchmesser von 56 mm. Die Probenfläche beträgt 8,72577 cm². In einer Prüfmaschine werden die Proben einer zeitlich veränderlichen Druckkraft ausgesetzt, die senkrecht auf die Fläche der Probe wirkt. Ein Sensor bestimmt die Änderung der Dicke der GDL im zeitlichen Verlauf bei dem jeweils einwirkenden Druck. Die Probe ist auf einer Vorrichtung zur Bestimmung der elastischen und plastischen Verformung mittels Kraftsensoren gelagert, wobei die Bewegung über Federn auf die Probe übersetzt wird. Der Verfahrweg bis zum Erreichen der maximalen Druckkraft wird über Wegsensoren bestimmt. Da die Verformung der Probe nichtlinear ist, wird der Messverlauf der relativen Veränderung angepasst. Ein Messzyklus, d.h. eine einmalige Belastung bis Maximaldruck und die folgende Entlastung dauert 1 min. Die Probe durchfährt drei Belastungszyklen. Der Anfangswert, bei dem nur eine geringe Kraft auf die Probe ausgeübt wird beträgt 0,025 MPa. Typische Druckwerte zur Bestimmung des Compression Set-Werts (und weiterer physikalischer Größen, wie der Dicke, der elektrischen Leitfähigkeit bzw. des Flächenwiderstands, der Gaspermeabilität, etc.) sind z.B. 0,6 MPa, 1,0 MPa und 2,4 MPa.

Der Compression Set-Wert für einen bestimmten Druck ergibt sich aus der Differenz der bei diesem Druck gemessenen Dicke im ersten Belastungszyklus und der bei diesem Druck im dritten Belastungszyklus gemessenen Dicke.

Bevorzugt weist die erfindungsgemäße GDL einen Compression Set-Wert bei 6 bar (0,6 MPa), gemessen nach dem zuvor beschriebenen Verfahren an einer ringförmigen Probe mit einem inneren Durchmesser von 45 mm und einem äußeren Durchmesser von 56 mm an einer GDL mit einem Flächengewicht von 90 bis 95 g/m² und einer MPL-Beladung von 15,0 bis 22,0 g/m² von höchstens 6 µm auf.

Die Bestimmung der Dicke der Gasdiffusionslage kann nach der DIN 53855-1:1993-08 "Bestimmung der Dicke textiler Flächengebilde" erfolgen. Die Bestimmung der Dicke bei einer bestimmten Druckkraft (z.B. bei 0,025 MPa oder bei 1,0 MPa) kann in einer Vorrichtung zur Messung des Compression Sets, wie zuvor ausführlich beschrieben, erfolgen.

Die Bestimmung der flächenbezogenen Masse in g/m² kann nach ISO 9073-1 bzw. EN 29073-1:1992 erfolgen.

### Brennstoffzelle

Ein weiterer Gegenstand der Erfindung ist eine Brennstoffzelle, umfassend wenigstens eine Gasdiffusionslage, wie zuvor definiert oder erhältlich durch ein Verfahren, wie zuvor definiert.

Prinzipiell eignet sich die erfindungsgemäße Gasdiffusionslage für alle üblichen Brennstoffzelltypen. Bevorzugt handelt es sich bei der erfindungsgemäßen Brennstoffzelle um eine Protonenaustauschmembran-Brennstoffzelle (englisch: proton exchange membrane fuel cell, PEMFC). Protonenaustauschmembran-Brennstoffzellen werden auch als Polymerelektrolytbrennstoffzelle (englisch: polymer electrolyte fuel cell, PEFC) oder Niedertemperatur-Polymerelektrolytmembran-Brennstoffzelle (englisch: low temperature polymer electrolyte membrane fuel cell, LT-PEMFC) bezeichnet. Eine spezielle Ausführung der Erfindung sind Wasser-Sauerstoff-Brennstoffzellen in Form von Niedertemperatur-Protonenaustauschmembran-Brennstoffzellen (PEMFC). Auf die zuvor gemachten Ausführungen zum Aufbau von Brennstoffzellen wird in vollem Umfang Bezug genommen.

Die erfindungsgemäßen Brennstoffzellen umfassen vorzugsweise eine Polymer-Elektrolyt-Membran, auf die auf der Anoden- und Kathodenseite eine Katalysatorschicht aufgebracht ist, die die Elektroden ausbildet. Bevorzugt befindet sich auf der Anoden- und/oder Kathodenseite eine Gasdiffusionslage (GDL) in Kontakt mit der Katalysatorschicht. Die Brennstoffzellen weisen speziell eine Polymer-Elektrolyt-Membran auf, auf die eine Katalysatorschicht aufgebracht ist, die mit der Oberfläche der mikroporösen Lage B) einer erfindungsgemäßen Gasdiffusionslage in Kontakt ist. Speziell weisen die Brennstoffzellen auf der Kathodenseite eine erfindungsgemäße Gasdiffusionslage auf, wobei die Katalysatorschicht mit der Oberfläche der mikroporösen Lage B) der Gasdiffusionslage in Kontakt ist. Spezieller weisen die Brennstoffzellen auf der Kathodenseite und auf der Anodenseite eine erfindungsgemäße Gasdiffusionslage auf, wobei sowohl die Kathodenschicht als auch die Anodenschicht jeweils mit der Oberfläche der mikroporösen Lage B) einer erfindungsgemäßen Gasdiffusionslage in Kontakt ist.

Es ist ein Vorteil der Erfindung, dass die Transportprozesse durch die Gasdiffusionslage gezielt an die Gradienten der durch die Brennstoffzelle strömenden Betriebsmedien und/oder der Betriebsparameter der Brennstoffzelle angepasst werden können. Dazu korrespondiert in der Regel wenigstens ein Eigenschaftsgradient der Gasdiffusionslage mit wenigstens einem der Eigenschaftsgradienten der durch die Brennstoffzelle strömenden Betriebsmedien und/oder der Betriebsparameter der Brennstoffzelle.

Ein weiterer Gegenstand der Erfindung ist die Verwendung einer Gasdiffusionslage, wie zuvor definiert, oder erhältlich durch ein Verfahren, wie zuvor definiert, in einer Protonenaustauschmembran-Brennstoffzelle.

### FIGURENBESCHREIBUNG

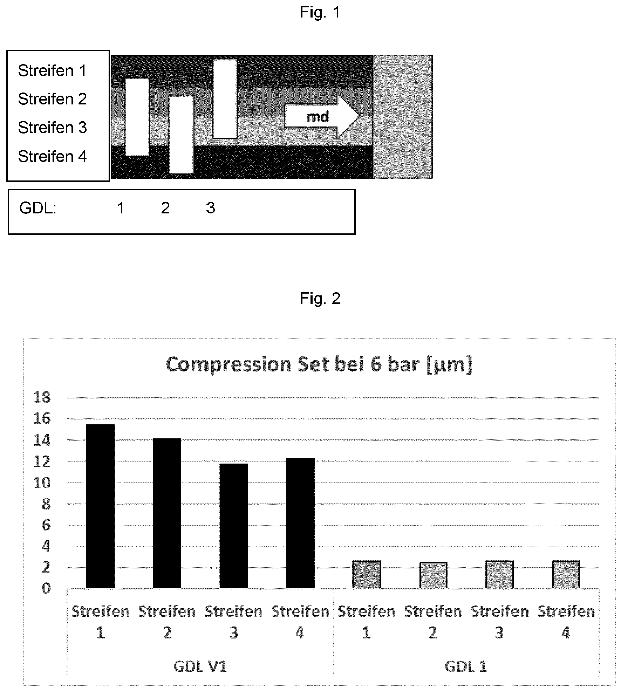

Figur 1 zeigt die Draufsicht auf ein GDL-Material, dessen Herstellung in Beispiel 1 beschrieben ist. Auf ein Faservlies im DIN A3-Format (29,7 x 42 cm, wobei md die Maschinenrichtung bezeichnet) wurden in Längsrichtung 4 lateral aneinandergrenzende Streifen mit 4 verschiedenen MPL-Pasten (Paste 1 bis 4) in einer Breite von jeweils 7 bis 8 cm aufgetragen. Aus dem getrockneten und gesinterten Material wurden Gasdiffusionslagen im Format 274,8 x 96,5 mm mit der langen Seite quer zur Maschinenrichtung ausgestanzt. Figur 1 zeigt 3 alternative Stanzpositionen (GDL 1 bis 3). Die erhaltenen GDL weisen einen Eigenschaftsgradienten in Richtung der x-Achse auf, wobei GDL 1 über 4 Streifen mit jeweils unterschiedlichen Eigenschaften und die GDL 2 und 3 je über 3 Streifen mit unterschiedlichen Eigenschaften verfügen. Natürlich sind auch weitere Stanzpositionen sowie weitere Formate möglich, die auch einen anderen Winkel als 90° zur x-Achse haben können, um die Gradienten zu variieren. Die GDL kann auch in anderen Formen, z.B. Quadrate, Ovale, Kreise ausgestanzt werden um weitere GDL-Varianten mit jeweils individuellen Gradienten zu erzeugen. Die erfindungsgemä-ßen GDL wurden einer Nachbehandlung bei erhöhtem Druck und erhöhter Temperatur unterzogen. Die nicht nachbehandelten GDL dienen als Vergleich.
Figur 2 zeigt jeweils die plastischen Verformungseigenschaften (Setzverhalten) anhand der Compression Set-Werte bei 6 bar für die vier Streifen der Vergleichs-GDL (linke Balken) und der erfindungsgemäßen GDL (rechte Balken).
Figur 3a zeigt für die vier Streifen der Vergleichs-GDL die trockene Diffusionslänge in µm (Dreiecke), die Dicke der GDL bei 2 MPa in µm (Quadrate) und die Gurley-Werte in s (Kreise).
Figur 3b zeigt für die vier Streifen der erfindungsgemäßen GDL die trockene Diffusionslänge in µm (Dreiecke), die Dicke der GDL bei 2 MPa in µm (Quadrate) und die Gurley-Werte in s (Kreise).
Figur 4 zeigt für die vier Streifen die Änderung der Eigenschaften bei der trockenen Diffusionslänge (Dreiecke) und den Gurley-Werten (Kreise) durch die Nachbehandlung bei erhöhtem Druck und erhöhter Temperatur. Die Graphen zeigen die Differenzen der Werte (Δ-Werte) für die erfindungsgemäße GDL (GDL 1) und die Vergleichs-GDL (GDL V1).

Die folgenden Beispiele dienen der Erläuterung der Erfindung, ohne sie in irgendeiner Weise zu beschränken.

### BEISPIELE

### I) Herstellung von Gasdiffusionslagen

### Herstellungsbeispiel 1:

Herstellung einer erfindungsgemäßen Gasdiffusionslage und einer Vergleichsdiffusionslage mit Eigenschaftsgradient in x-Richtung

Von einem kommerziell erhältlichen elektrisch leitfähigen Faservlies mit einer Dicke von 0,145 mm, einem Flächengewicht von 60 g/m² und einem Durchgangswiderstand (through plane) bei 1 MPa Verpressung von 6,6 mΩcm² wurden Blätter im DIN A3-Format (29,7 x 42 cm) in Längsrichtung (Maschinenrichtung, md) von der GDL-Rolle ausgestanzt und einzeln beschichtet. Zur Erzeugung einer mikroporösen Schicht mit einem Eigenschaftsgradienten wurden in Längsrichtung des Faservlieses 4 lateral aneinandergrenzende Streifen mit MPL-Pasten in einer Breite von jeweils 7 bis 8 cm aufgetragen (siehe Figur 1). Die Pasten hatten eine Zusammensetzung gemäß Tabelle 1. Zu ihrer Herstellung wurden PTFE, verschiedene Kohlenstoffe und Kunststoffpartikel als Porenbildner in destilliertem Wasser dispergiert und durch Rakeln mit einem Rakelspalt von 240 µm auf das Faservlies aufgetragen. Anschließend wurden die Blätter bei 160 °C getrocknet und bei 400 °C gesintert. Die resultierenden MPL-Beladungen betrugen je nach Streifen 15 bis 22 g/m².

**Tabelle 1**

| | PTFE [Gew.-%]¹⁾ | Kohlenstoff [Gew.-%]¹⁾ | Porenbildner [Gew.-%]¹⁾ | Feststoffanteil [Gew.-%]¹⁾ |
|---|---|---|---|---|
| Paste 1 | 2,3 | 9,3 | 0 | 11,6 |
| Paste 2 | 1,9 | 7,7 | 0,2 | 9,8 |
| Paste 3 | 2,1 | 8,3 | 0,4 | 10,8 |
| Paste 4 | 2,1 | 8,4 | 0,4 | 10,9 |

| | | | | |
|---|---|---|---|---|
| ¹) jeweils bezogen auf das Gesamtgewicht der gesinterten Paste | | | | |

Aus den erhaltenen Blättern wurden Gasdiffusionslagen im Format 274,8 x 96,5 mm mit der langen Seite quer zur Maschinenrichtung ausgestanzt. Figur 1 zeigt 3 alternative Stanzpositionen. Die erhaltenen GDL weisen einen Eigenschaftsgradienten in Richtung der x-Achse auf, wobei GDL 1 über 4 Streifen mit jeweils unterschiedlichen Eigenschaften und die GDL 2 und 3 je über 3 Streifen mit unterschiedlichen Eigenschaften verfügen.

Zur Herstellung einer Brennstoffzelle können die GDL beispielsweise so verbaut werden, dass die x-Richtung (lange Seite) in der Richtung der direkten Verbindung zwischen Zuführung und Abführung der Betriebsstoffe zur Strömungsverteilerplatte liegt. Bei einer Strömungsverteilerplatte mit geraden Kanälen liegt somit die lange Seite der GDL parallel zu den Gaskanälen. Aber auch bei einem anderen Flowfield-Design kann der Einbau beispielsweise so erfolgen, dass der auf der Kathodenseite (Luftseite) der Brennstoffzelle zugeführte O₂-reiche Brennstoff zuerst mit der von Paste 1 gebildeten MPL (Schicht 1) und der abgeführte O₂-arme Brennstoff mit der von Paste 4 gebildeten MPL (Schicht 4) in Kontakt kommt.

### II) Anwendungstechnische Beispiele

Für die im Folgenden beschriebenen Messungen wurden die Vergleichs GDL V1 und die erfindungsgemäße GDL 1 eingesetzt, die jeweils über 4 Streifen verfügen.

Die Ermittlung der Compression-Set-Werte erfolgte nach dem zuvor ausführlich beschriebenen Verfahren. Nach diesem Verfahren wurden auch die Dicke, die Gasdurchlässigkeit, die rockendiffusionslänge und der elektrische Widerstand, jeweils bei einer bestimmten Druckkraft ohne vorherige Krafteinwirkung / im ersten Belastungsvorgang bestimmt. Die Werte sind in der folgenden Tabelle 1 angegeben.

Die Gurley-Gaspermeabilität wurde jeweils senkrecht zur Materialebene mit einem Gurley-Densometer der Firma Gurley Precision Instruments gemäß ISO 5636-5 bestimmt. Die Ergebnisse sind ebenfalls Tabelle 2 zu entnehmen.

Die Trockene Diffusionslänge wurde mit Hilfe einer stationären Wicke-Kallenbach-Zelle bestimmt. Die Ergebnisse sind ebenfalls Tabelle 2 zu entnehmen.

Die Bestimmung des (spezifischen) elektrischen Widerstandes durch die Ebene (through plane, TP) erfolgte durch 4-Punkt-Messung.

Die erfindungsgemäße Nachbehandlung der Gasdiffusionslagen bei erhöhtem Druck und erhöhter Temperatur führt zu einer deutlichen Verringerung des Anteils an plastischer Verformung. Figur 2 zeigt dies anhand der Compression Set-Werte bei 6 bar. Die Verformung der nachbehandelten GDL erfolgt überwiegend elastisch. Zudem zeigt sich auch eine deutliche Homogenisierung des Setzverhaltens der verschiedenen Streifen. Die Varianz des Setzverhaltens von Streifen zu Streifen nimmt deutlich ab.

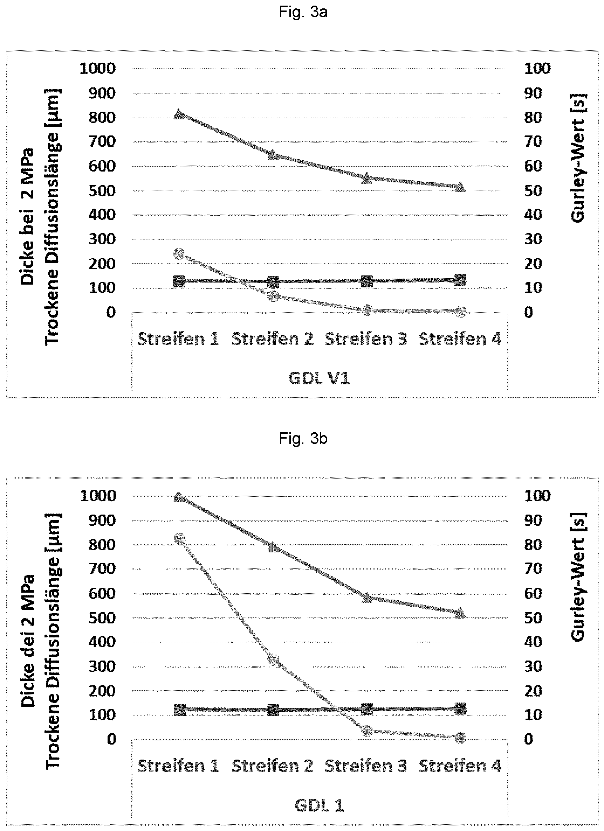

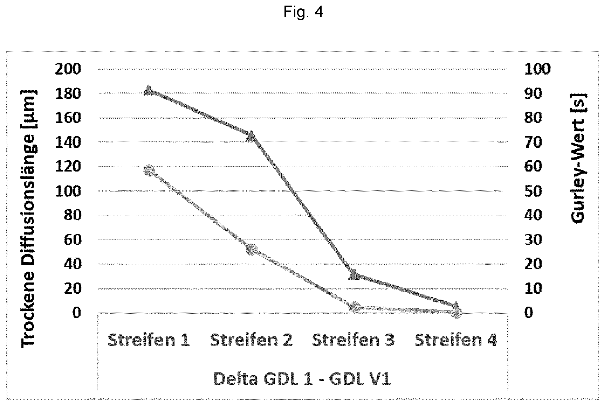

Figuren 3a, 3b und 4 zeigen den Einfluss der erfindungsgemäßen Nachbehandlung auf die Transporteigenschaften der GDL und deren Gradienten anhand der trockenen Diffusionslänge und der Gurley-Werte. Je nach Zusammensetzung der Streifen ändern sich die Transporteigenschaften durch die Behandlung bei erhöhtem Druck und erhöhter Temperatur deutlich (Streifen 1 und 2) bzw. wenig (Streifen 3 und 4). Dies lässt sich nutzen, um die Ausprägung der Gradienten nach Bedarf zu steuern.

**Tabelle 2**

| | | **GDL V1** | | | | **GDL 1** | | | |
|---|---|---|---|---|---|---|---|---|---|
| **Eigenschaft** | **Einheit** | **Streifen 1** | **Streifen 2** | **Streifen 3** | **Streifen 4** | **Streifen 1** | **Streifen 2** | **Streifen 3** | **Streifen 4** |
| MPL-Beladung | g/m2 | 21,1 | 15,5 | 15,2 | 15,8 | 21,3 | 15,9 | 14,6 | 15,9 |
| Feststoffgehalt MPL-Streifen gesintert | % | 11,50 | 9,64 | 10,02 | 11,09 | 11,50 | 9,64 | 10,02 | 11,09 |
| Flächengewicht GDL-Streifen | g/m2 | 95 | 92 | 91 | 94 | 94 | 91 | 93 | 94 |
| Dicke bei 0,025MPa | µm | 177 | 181 | 182 | 186 | 154 | 151 | 154 | 159 |
| Dicke bei 0,6 MPa | µm | 148 | 144 | 145 | 149 | 132 | 130 | 133 | 136 |
| Dicke bei 1,0 MPa | µm | 141 | 136 | 139 | 142 | 128 | 127 | 130 | 133 |
| Dicke bei 2,0 MPa | µm | 130 | 127 | 130 | 133 | 124 | 122 | 125 | 128 |
| Compression Set bei 0,6 MPa (Differenz 1./3. Zyklus) | [µm] | 15,4 | 14,1 | 11,8 | 12,2 | 2,6 | 2,4 | 2,6 | 2,6 |
| Compression Set bei 1,0 MPa (Differenz 1./3. Zyklus) | µm | 11,4 | 9,5 | 8,3 | 8,8 | 2,1 | 2,0 | 2,0 | 2,0 |
| Compression Set bei 2,0 MPa (Differenz 1./3. Zyklus) | µm | 5,0 | 4,0 | 3,8 | 4,1 | 1,1 | 1,1 | 1,2 | 1,2 |
| Widerstand TP bei 0,6 MPa 4-Punkt, 1. Zyklus | mΩcm² | 2,0 | 1,8 | 1,5 | 1,4 | 2,5 | 2,4 | 2,0 | 2,0 |
| Widerstand TP bei 1,0 MPa 4-Punkt, 1. Zyklus | mΩcm² | 1,7 | 1,5 | 1,3 | 1,2 | 2,0 | 2,0 | 1,6 | 1,6 |
| Widerstand TP bei 2,0 MPa 4-Punkt, 1. Zyklus | mΩcm² | 1,3 | 1,2 | 1,0 | 0,9 | 1,6 | 1,6 | 1,4 | 1,3 |
| Gurley Gaspermeabilität | s | 24,1 | 6,8 | 1,0 | 0,6 | 82,8 | 33,0 | 3,6 | 0,9 |
| Trockene Diffusionslänge | µm | 817 | 648 | 553 | 518 | 1.000 | 793 | 585 | 523 |

| | | | | | | | | | |
|---|---|---|---|---|---|---|---|---|---|
| TP = through plane | | | | | | | | | |

## Patentansprüche

1. Verfahren zur Herstellung einer Gasdiffusionslage für eine Brennstoffzelle, umfassend
A) ein flächiges elektrisch leitfähiges Fasermaterial und
B) eine mikroporöse Lage auf wenigstens einer der Flächen des Fasermaterials, wobei die mikroporöse Lage in Bezug auf die Grundfläche der Gasdiffusionslage (in der x,y-Ebene) wenigstens einen Eigenschaftsgradienten bezüglich wenigstens einer chemischen und/oder physikalischen Eigenschaft aufweist,
bei dem man
i) ein flächiges elektrisch leitfähigen Fasermaterial A) bereitstellt,
ii) das in Schritt i) bereitgestellte Fasermaterial mit einem Precursor zur Ausbildung einer mikroporösen Lage beschichtet, wobei die Zusammensetzung des Precursors zur Erzeugung eines Gradienten variiert wird,
iii) das in Schritt ii) erhaltene beschichtete Fasermaterial einer Nachbehandlung bei erhöhtem Druck und gegebenenfalls erhöhter Temperatur unterzieht.

2. Verfahren nach einem der vorhergehenden Ansprüche, wobei die Behandlung in Schritt iii) bei einem Druck im Bereich von 0,5 bis 10,0 MPa, bevorzugt von 1,5 bis 8,0 MPa, durchgeführt wird.

3. Verfahren nach Anspruch 1 oder 2, wobei die Behandlung in Schritt iii) bei einer Temperatur im Bereich von 100 bis 350°C, bevorzugt von 120 bis 330°C, besonders bevorzugt von 150 bis 320°C, durchgeführt wird.

4. Verfahren nach einem der vorhergehenden Ansprüche, wobei zur Behandlung in Schritt iii) eine Vorrichtung eingesetzt wird, ausgewählt unter Einetagenpressen, Mehretagenpressen, Endlos-Bandpressen, Kalandern und Kombinationen davon, bevorzugt ausgewählt unter Doppelbandpressen, Kalandern und Kombinationen davon.

5. Verfahren nach einem der vorhergehenden Ansprüche, wobei die Behandlung in Schritt iii) in einer Presse über einen Zeitraum von 5 Sekunden bis 5 Minuten, bevorzugt von 10 Sekunden bis 2 Minuten, durchgeführt wird.

6. Verfahren nach einem der vorhergehenden Ansprüche, wobei die Behandlung in Schritt iii) in einem Kalander über einen Zeitraum von größer 0 Sekunden bis 10 Sekunden, bevorzugt von 0,1 Sekunden bis 5 Sekunden, durchgeführt wird.

7. Verfahren nach einem der vorhergehenden Ansprüche, wobei die Behandlung in Schritt iii) in einem Kalander bei einem Liniendruck im Bereich von 5 bis 500 N/mm, vorzugsweise 10 bis 100 N/mm, erfolgt.

8. Verfahren nach einem der vorhergehenden Ansprüche, wobei die Zusammensetzung des Precursors während des Beschichtens so variiert wird, dass die mikroporöse Lage in Bezug auf die Grundfläche der Gasdiffusionslage (in der x,y-Ebene) wenigstens einen monotonen Eigenschaftsgradienten aufweist.

9. Gasdiffusionslage, erhältlich durch ein Verfahren, wie in einem der Ansprüche 1 bis 8 definiert.

10. Gasdiffusionslage für eine Brennstoffzelle, umfassend
A) ein flächiges elektrisch leitfähiges Fasermaterial und
B) eine mikroporöse Lage auf wenigstens einer der Flächen des Fasermaterials,
wobei die Gasdiffusionslage in Bezug auf ihre Grundfläche (in der x,y-Ebene) wenigstens einen Eigenschaftsgradienten bezüglich wenigstens einer chemischen und/oder physikalischen Eigenschaft aufweist und die Gasdiffusionslage einer Nachbehandlung bei erhöhtem Druck und gegebenenfalls erhöhter Temperatur unterzogen wurde, so dass sie eine gegenüber einer nicht nachbehandelten Gasdiffusionslage eine verringerte plastische Verformbarkeit aufweist.

11. Gasdiffusionslage nach Anspruch 9 oder 10, die gegenüber einer nicht nachbehandelten Gasdiffusionslage einen verringerten Compression Set-Wert aufweist.

12. Gasdiffusionslage nach einem der Ansprüche 9 bis 11, wobei die mikroporöse Lage wenigstens einen Eigenschaftsgradienten aufweist, vorzugsweise einen kontinuierlichen oder sprunghaften Eigenschaftsgradienten, der sich in Abhängigkeit vom Ort monoton ändert.

13. Gasdiffusionslage nach einem der Ansprüche 9 bis 12, wobei die mikroporöse Lage wenigstens 2, vorzugsweise wenigstens 3, insbesondere wenigstens 4 Bereiche aufweist, die sich in wenigstens einer Eigenschaft unterscheiden.

14. Gasdiffusionslage nach einem der Ansprüche 9 bis 13, wobei die Eigenschaft, die einen Gradienten aufweist, ausgewählt ist unter
- der chemischen Zusammensetzung des flächigen Fasermaterials A) und/oder der mikroporösen Lage B),
- den mechanischen Eigenschaften des flächigen Fasermaterials A) und/oder der mikroporösen Lage B),
- den Transporteigenschaften des flächigen Fasermaterials A) und/oder der mikroporösen Lage B),
- Kombinationen davon.

15. Gasdiffusionslage nach einem der Ansprüche 9 bis 14, die einen Gradienten der trockenen Diffusionslänge und/oder der Gurley-Gaspermeabilität aufweist.

16. Brennstoffzelle, umfassend wenigstens eine Gasdiffusionslage, wie in einem der Ansprüche 9 bis 15 definiert, oder erhältlich durch ein Verfahren, wie in einem der Ansprüche 1 bis 8 definiert.

17. Brennstoffzelle nach Anspruch 16, umfassend eine Polymer-Elektrolyt-Membran, auf die eine Katalysatorschicht aufgebracht ist, wobei die Katalysatorschicht mit der Oberfläche der mikroporösen Lage B) der Gasdiffusionslage in Kontakt ist.

18. Verwendung einer Gasdiffusionslage, wie in einem der Ansprüche 9 bis 15 definiert, oder erhältlich durch ein Verfahren, wie in einem der Ansprüche 1 bis 8 definiert, in einer Protonenaustauschmembran-Brennstoffzelle.
